# EUROPEAN PATENT APPLICATION

(11) **EP 1 722 576 A2**
(43) Date of publication of application: **15.11.2006**
(21) Application number: 06380098.1
(22) Date of filing: 27.04.2006
(51) Int. Cl.: H04N 13/00

(54) **Perfected procedure for fabrication of stereoscopic display monitors**

(30) Priority: 29.04.2005 ES 200501051
(71) Applicant: Velasco Dorado, Dionisio, 28340 Valdemoro (Madrid) (ES)
(72) Inventor: Velasco Dorado, Dionisio, 28340 Valdemoro (Madrid) (ES)
(74) Representative: Canadell-Isern, Roberto

(57) **Abstract**

PERFECTED PROCEDURE FOR FABRICATION OF STEREOSCOPIC DISPLAY MONITORS that allows for adaptation to the final natural polarization, or added to monitors of any kind or other image reproduction systems, composed of two monitors (1) and (2) with an angular phase difference of 90° with respect to the final polarization, which is reflected and shown through a beam splitter (3) located diagonally between them, using for the 3D display a polarized optical inhibitor (4), and permitting the superimposition of polarized virtual images (12) that will be reflected in the beam splitter (3) mixed by transparency with real images (13).

## Description

### PURPOSE OF THE INVENTION

This invention refers to a procedure for fabrication of stereoscopic display monitors.

More specifically, the purpose of the invention is to adapt the system to the final polarization achieved by TFT-LCD monitors or any other kind of monitor, resulting in a 3D monitor composed of two monitors with an angular phase difference of 90° with respect to the final polarization achieved by each one, such that the goggles or an alternative optic inhibitor will also have a 90° phase difference in their polarization, in which the image is reflected and revealed on a beam splitter located equidistantly and diagonally between them, and with the possibility of varying the angular position and distance between these monitors.

### FIELD OF THE INVENTION

The field of application of the invention is the industry that manufactures equipment for stereoscopic display.

### BACKGROUND OF THE INVENTION

With reference to the state of the art, it should be noted that the applicant is knowledgeable about some systems used to obtain 3D images, most of which involve significant drawbacks that advise against their use.

The existing systems for producing a 3D display on monitors do not provide information on the stereoscopic couple simultaneously to the two eyes, or else the image of each eye has to be processed, meaning that its natural chromatic information is lost. This deteriorates the quality and definition of the image; in addition, when the image is interpreted by the brain, it perceives an error and must reprocess and work unnaturally to shape the 3D image, causing fatigue, dizziness and visual weariness.

However, the applicant holds the Spanish Patent published with no. 2024269 for an optic system for 3D vision, which describes and lays claim to an optic system that results in a 3D vision, based on the use of two images reproduced by two twin TVs, which are installed such that their screens form a right angle, with a 45° crystal equidistantly between the two to which polarizers are coupled which act in a 90° angle with respect to each other. The invention is complemented by the use of goggles with a polarization angle in each eye identical to that of the screen whose image they receive, respectively.

It should be noted that the applicant of this invention is not aware of the existence of a perfected procedure for fabrication of stereoscopic display monitors that presents technical, structural and constitutive features similar to the ones proposed by this invention.

### DESCRIPTION OF THE INVENTION

The perfected procedure for fabrication of stereoscopic display monitors proposed by the invention includes significant advantages over known techniques used for TV, computer and videogame monitors and receivers, as well as translucent and semi-transparent photographs, dura-trans films, and in general any image formed by luminous points or masses. The invention is characterized by the fact that it respects the human visual protocol.

More specifically, the perfected procedure for fabrication of stereoscopic display monitors is based on adaptation of the invention to the final polarization achieved by TFT-LCD monitors or any other type of monitor, as in this type of monitor the image displayed is polarized and, depending on the screen manufacturer, model or size, the angle of this polarization may vary for application of the 3D monitor. The invention consists of two monitors with a 90° angular phase difference with respect to the final polarization achieved by each of them. In this way, the polarization of the goggles or the alternative optical inhibitor required for display of the images will also have a 90° phase difference in their polarization.

If, after being incorporated into the system, the above mentioned monitors or any other image generator based on polarization produce an angular phase difference in their polarizations other than 90°, the polarizers built into the goggles or into the special frames that substitute for these or into another alternative optical inhibitor will not have a 90° angular phase difference in their polarization, as the polarization angle of each eye is determined by a 90° angular phase difference with respect to the polarization of the monitor which should be visually inhibited to each eye.

In this way, the stereoscopic information is correctly distributed to its respective eye and the 3D image is correctly formed in the brain, although there is a loss of luminosity with respect to the resulting image described above; furthermore the position of polarization in the goggles is more critical and will require much more precision, but this broadens the possibility of using any monitor model available on the market.

The invention uses polarizing filters applied to the stereoscopic cameras that are recording or broadcasting images of a scene or space in which one or more 3D monitors are present; application of the polarizers to the cameras is achieved in a similar way as application to the goggles of an observer, since one polarizer would be installed on the left camera coinciding with the same polarization angle of the monitor that reproduces the image intended for the left eye, i.e. with a 90° phase difference with respect to the monitor that reproduces the image intended for the right eye, and one polarizer would be coupled to the right camera coinciding with the angle of polarization of the monitor in charge of reproducing the image for the right eye, i.e. with a 90° phase difference with respect to the monitor that generates the image for the left eye.

With this application, the stereoscopic images captured by the cameras can reproduce the three dimensions, not only of the real space being filmed but also of the images that are viewed in the monitors that form part of the setting or set.

The invention includes the possibility of using external polarized frames as optical inhibitor, to facilitate the display of the 3D images generated by the monitors, thus making it possible to do without the goggles. These may consist of passive polarizers applied in the same way in terms of the position and angle of polarization of the goggles, and various designs of shapes and sizes can be applied to these two fields of polarization, one for each eye.

The fields of polarization may also be composed of liquid crystals in order to achieve different effects in the visual information, as these crystals allow us to change the angle of polarization by electrically exciting one or both fields according to the intended effect.

The goggles will be provided with crystals or plastics with the polarization angles phase lagged 90° in the same way as described above, and in order to ensure that the observer has full freedom of movement without losing 3D vision, they will be provided with a free angular balancing system consisting of a small counterweight on the bottom of each filter or filter support which, by taking advantage of the force of gravity, rotates the filters and always keeps the polarization angles of the goggles with the same angular position with respect to the two polarization fields generated in the monitor.

In the invention, the polarizing filters used in the goggles are replaced by liquid crystal polarizers that fulfill the same purpose as described above. In this case, each crystal of the goggles will be managed by electromagnetic fields that are in charge of varying the polarization angle when the observer nods his head, thus ensuring that the goggle polarization will always coincide in the programmed position with the monitor polarizations, regardless of the observer's position, i.e., straight up, lying down or in an inclined position.

The arms of the goggles have built-in mini-earphones that are automatically enabled when display in 2D-Dual mode is adopted; this allows two groups of observers to simultaneously see two different programs or broadcasts all over the screen, making it necessary to differentiate two audio bands. The sound of the monitor loudspeakers would therefore be cancelled out, and at the same time the polarizers of the goggles or the liquid crystal polarizers would be oriented with the same angle in both eyes, coinciding with the polarization of the monitor that broadcasts the selected program. It should be noted that when the 2D-Dual mode is used, the image is flat.

It should be noted that a mobile structure is created that allows the 3D monitor to become a conventional 2D monitor, and this mutation or change of structure and functionality is very useful when there are different structures and elements forming part of a multi-purpose environment or space .

On the other hand, the invention is characterized by the fact that if the optical axes of the TFT-LCD monitors are identical and determine a final perpendicular and horizontal polarization, an optical delayed action device will be applied to one of them; when the polarized light passes through it, its optical axis will rotate 90° and in this way the images for the right and left eyes will be discriminated as described above. Also it will be possible to correct the resulting angle of polarization by applying an optical delayed action device to each of the monitors that makes a 45° rotation of its optical axis or polarization angle in order to adapt the polarization of both monitors to that required by the system; or the resulting polarization angle may be corrected by applying a polarizer to each of the screens that achieves a polarization different from the final polarization of the monitor screens, which could be 45° on each monitor, or 45° on one monitor and - 45° on the other; depending on whether the natural position of one of the monitors has been changed in the structure used or if horizontal or vertical deflection has been provided in one of the monitors, the value of the angles of the polarizer filters used may be varied to correct that deviations that the image reflected in the semi-silvered crystal beam splitter and that visualized by transparency may undergo.

In certain system applications, the observer may have the optical sensation of seeing 3D images on a single monitor, if the components are separated from each other enough so that the observer does not visually associate a structural assembly of the system component elements; by maintaining an equidistance of the monitors and their angular position with respect to the beam splitter, the optical inhibitors for this application could be any of those mentioned above - polarized goggles, external supports - and these could be isolated mobile or stationary elements, or form part of an element outside the system, e.g. the crystal or glass of a showcase, a structural or dividing screen for architectonic spaces, computer supports, transparent structures of urban furniture, etc.

On maintaining a distanced position isolated from the elements, the system allows for display of several monitors or image composition formed by "video-Wolf" type structures of several TFT-LCD monitors, with the beam splitter and optical inhibitor maintaining a small size if they are located near the observer, since these compositions occupy a space equivalent to that occupied by the monitors; they can also intervene by individually forming part of this composition or by generating different mixed compositions between other types of monitors, projected images, retro-projected images, opaque or translucent or illuminated or retro-illuminated photographs, applying to all these elements a polarization similar to the monitors so that for the image viewed by transparency of the beam splitter, the polarization is achieved in the same optical axis and coinciding with the same angle of polarization as a monitor, and for the image or composition viewed by reflection a polarization coinciding with the other monitor is achieved. These polarizations can be individually applied to each image generating element, or else a structure can be used which includes the beam splitter, the optical image inhibitor for the left and right eyes, and the polarizers of the optical fields which, on applying them to this structure, affect all the images we view through them, and therefore it is not necessary to use polarizing filters for each of the image generating supports.

Alternatively, instead of the monitor or generating supports of images viewed by transparency through the beam splitter, the invention provides for use of the real space and real objects viewed through it as a 3D image that will serve as a support or scenario for generating virtual objects and environments that can optimally coexist with the real objects and environment, using the monitor image that we view by reflection in the beam splitter to provide stereoscopic information on the virtual environment and objects to the brain; this information will have been generated on the basis of information obtained from the point predestined to the final observer, so that from this spatial point we obtain two photographic or video shots that provide us with the stereoscopic couple of the real environment and objects (with the camera lenses having an angular opening as near as possible to human vision); and using this stereoscopic couple as the basis or template for generation of the stereoscopic virtual environment and objects, adjusting the size, distances and phase difference of angular position, such that if they belong to the left visual field, it will be adjusted to the parameters of the image obtained from the real environment by the left camera, and if they belong to the visual field of the right eye, it will be adjusted to the parameters of the real image provided by the right camera. In this way, when the observer is situated in the display support, he will perceive the real environment and objects by transparency of the beam splitter, and the virtual environment and objects would be located at the same point or on the same 3D spatial plane as their real twins; in this way, the achieved effect can be used, for example, to generate over a space with real archaeological remains a stereoscopic 3D image that would provide us with a perfectly superimposed image of the original appearance of the architectonic elements and objects.

The system also allows for the possibility of interaction to request or generate, on a programmed basis, detailed information on some or all of the generated elements, so that a chosen object can be moved through the virtual space and brought closer to the observer, magnifying its size if necessary, rotating to observe it from all angles, changing its physical features such as transparency, or decomposing it into sub-objects, and audio provided to give the pertinent explanations in the requested language. The structure surrounding the observer (monitors, retro-projectors or light support for photography, optical inhibitor, beam splitter) can be fixed or rotated to be able to observe a 360° view; this movement is limited by the generated scenario and objects, as it is adapted and superimposed on the new scenarios and objects that appear in the visual field of the observer.

The 3D or stereoscopic information can be generated by unifying the stereoscopic couple in a single image and applying processing for viewing through the "anaglyph" system, in which the optical inhibitor is composed of a blue-green colored filter in one of its fields and a red filter in the other. A monitor can be used for video image or a light support for photographic image, which can include an electromagnetic streaming system for display and exhibit of various photograms. The photographic support can be duplicated and the display of one or the other selected by providing a 90° rotation to the beam splitter. These supports for providing images can be arranged and their number increased, also placing them to the right and left at different heights and angles with respect to the observer, correcting and adapting the position and angle of the beam splitter with an electromechanical device to select which support or image reflected in it is going to be superimposed on the real scenario.

According to the invention, the final virtual image can also be obtained by one monitor generating the image intended for the right eye and the other the image intended for the left eye, using two beam splitters, one included in the structure of the monitor which, together with the polarized optical inhibitor, provides the generated virtual stereoscopic image to the brain, and the second beam splitter visually blends or superimposes the generated virtual image and the image of the real scenario.

On the other hand, the virtual stereoscopic information generated can also be reproduced with two projectors, such that to the projector that projects the virtual image intended, for example, for the right eye we would apply a polarizer filter whose optical axis polarizes the image with, for example, a -45° angle, and to the projector that projects the image intended for the left eye we would apply a polarizer filter whose optical axis polarizes the projected image 90° with respect to the polarization applied to the first projector. The two images thus polarized strike a screen built of any translucent material that has the property of not altering the polarized image or light, so that the retro-projector, when the images pass through the screen, conserves the optical axis of each image or its respective angle of polarization, with the optical inhibitor being composed of two polarization fields with a 90° phase difference between them. The one intended for the right eye coincides in its optical axis or degree of polarization with the polarizer applied to the first projector, and the one intended for the left eye coincides in its optical axis with the polarizer applied to the second projector. In this way, the stereoscopic information on the virtual environmental and objects generated are viewed by the observer by reflection on the surface of the optic splitter, and the real environment by transparency, with superimposition of the real and virtual images generated.

In parallel, to achieve balance of the luminosity of the generated image and the real image, as the latter on occasion is located in exteriors and is illuminated with natural light, the intensity of the real image is attenuated by darkening the beam splitter, which can also be formed by or include a film on its back composed of a photosensitive material that gradually darkens when the intensity of the exterior light increases, or by using a film of liquid crystal that is managed by the system itself and can become darker or lighter with electromagnetic pulses to adapt to the luminous needs between the generated and real image.

The real environment and objects may be in a room that should be observed, studied or monitored together with the objects and beings that are contained in that room, in which the virtual image will be used to show to the observer graphics or images that represent the result and analysis of any kind of scanner, particle bombardment or waves, etc., used to compare or differentiate things such as masses of heat, temperature, density, metal particles, etc., where representation of these results will be provided as stereoscopic image data which, by optimally superimposing them on the real environment for the observer, the latter will be able to detect and view all the information and results translated to masses or images of different colors that will occupy the real spatial points and planes. This provides visual spatial information in real time of everything analyzed, in such a way that the observer will have a predetermined position within the room, just as the readers or analyzers of the different scanning systems used, which are duplicated and strategically separated for each system used in order to provide the phase difference and spatial differentiation of the stereoscopic couple. The system can be technically adjusted so that the observer can move about inside the room, in which case, in addition to having the inhibitors connected, he will wear the receivers and analyzers of the different scanners or, if applicable, a movement reader or analyzer that provides information to a robotized support that imitates the observer's movement and that is equipped with all the above mentioned receivers and analyzers. For example, if an individual passes through the monitored environment or space with a weapon hidden in a suitcase, the guard will see the real person with a direct display and will detect the presence of the weapon, because he will see a more or less shiny color superimposed exactly on the real place where the weapon is, coded as a metal object, and which will move in real time and in the real spatial point, in such a way that for the observer the suitcase is a semi-transparent item.

Finally, it should be noted that the invention is primarily based on the human visual protocol, as it produces a 3D view in the monitors by providing the information on the stereoscopic couple simultaneously to the two eyes. However, it approaches even more this natural human vision, in which only a certain frontal space is viewed by the two eyes, and therefore three dimensionally, whereas the extremes are viewed as flat. The system is adapted such that the monitors present a special design, where the surface of the screen that reproduces the image of both with the stereoscopic couple is flat, and the surface of the screen that reproduces the images of the end angles is curved. As a result, the monitors can be based on the latest generation technology of flexible screens.

By taking advantage of this feature, the monitor screens can take on any arbitrary or strategic shape for system operation. The same effect can be achieved by using, for example, two or more monitors, whether flat or curved, flexible or mixed in shape, such that the monitors in charge of reproducing the images of the end angles can occupy the space of direct vision or a front or vertical positioning with respect to the observer's position, and since these images do not have to be viewed jointly by the two eyes, but rather the left angle of the image only has to be seen by the left eye and the outside right angle only by the right eye, the beam splitter does not need to cover this surface, since it suffices if it covers the front zone, and therefore its size can be reduced.

All the elements described above that make up the system in all its optional versions may be minimized in size and incorporated into a structure by way of a headset to be placed on the observer's head, thus achieving a stereoscopic visor with an angle of vision approaching 180° and differentiated with respect to the virtual reality headset systems available on the market, as the system manages to faithfully emulate the natural protocol of human visualization.

### DESCRIPTION OF THE DRAWINGS

To complement the description provided above and in order to better understand the features of the invention, this descriptive report is accompanied, as an integral part hereof, by a set of drawings in which, on an illustrative but not limitative basis, the following is shown:
Figure number 1 is a schematic side elevation view of a sample execution of the invention for a perfected procedure for fabrication of stereoscopic display monitors showing the idle positions of the monitors and the beam splitter (shown as a dotted line) and in the usage position (continuous line).
Figure number 2 shows two schematic views in front and side elevations of a support for display of images or optical inhibitor without requiring the use of polarized goggles.
Figure number 3 is a schematic side elevation view of a sample execution of the invention in which the components are separated from each other to give the observer the optical sensation of viewing the image in a single monitor.
Figure number 4 shows two schematic views in side and front elevations of a structure in which the beam splitter (semi-silvered) and the optic panel or image inhibitor polarizer are incorporated.
Figure number 5 is a schematic side elevation view of a sample execution of the invention in which the real images and virtual images are superimposed with a monitor or light box for photographic images.
Figure number 6 is a schematic side elevation view of a sample execution of the invention in which the real images and virtual images are superimposed with two monitors and two beam splitters.
Figure number 7 is a schematic side elevation view of a sample execution of the invention in which the real images and virtual images are superimposed with two retro-projectors.
Figure number 8 is a schematic side elevation view of a sample execution of the invention in which the real images and virtual images are superimposed inside a room.
Figure number 9 is a schematic view in perspective of an example of the coupling of the inhibitors, receivers and analyzers that the observer wears to be able to move around inside the room, according to the example of figure 8.
Figure number 10 is a schematic representation of the way in which natural human vision provides images to our brain.
Figures numbers 11 and 12 show two sample executions of the invention, respectively, in which the system is adapted to approach even more the natural human visual protocol, where the example of figure 11 has flexible screen monitors and the example of figure 12 a combination of several flat monitors.
Figure number 13 shows another sample execution of the invention, in which all the elements that make up the system are reduced in size and incorporated into a headset structure.

### DESCRIPTION OF A SAMPLE EXECUTION OF THE INVENTION

In view of the figures mentioned above and in accordance with the adopted numbering, it can be seen how the first figure shows a sample execution of the invention, in which the monitors -1- and -2- are positioned horizontally and adjacent to each other, with the beam splitter -3-, built of a semi-silvered crystal, located between them at an angle of 90° in an idle position and diagonally between the two in usage position.

In other sample executions (not shown), monitors -1- and -2- may be placed in any idle position and, by means of conventional dismounting, sliding systems, in usage position forming a 90° angle between them, whether in horizontal or vertical position, and with the beam splitter -3- in the bisectrix that forms this angle, and which may be incorporated into different support elements such as furniture, structures, etc.

Figure number 2 shows an example of an optical inhibitor -4-, made of an external polarized frame that acts in substitution for goggles to facilitate the display of 3D images, formed by a base or pedestal -5- from which a support -6- emerges and from which the polarized liquid crystal display elements -7- and -8- project, which optionally can be hidden inside support -5-.

Figure number 3 shows another sample execution of the invention in which the monitors -1- and -2- are positioned with a significant separation between them and with one of them, in this case monitor -1-, hidden from the view of the observer, who is located behind a crystal that acts as alternative optic inhibitor -4- and the beam splitter -3- is likewise at a distance from them, so that the observer is not aware of the existence of the two monitors and has the optic sensation of viewing the image in only one monitor -2-. The optic inhibitor -4- may be formed by several consecutive bands of the two polarization fields intended for each eye -7- and -8-, consecutively placing and intercalated between them other translucent or opaque bands that fulfill the function of forcing the observer to adopt a correct, intuitive position of each eye (left and right) on facing the system.

It should be noted that the angular position between monitors -1- and -2- may vary, as well as the distance between them, keeping an angular and spatial equidistance with respect to the beam splitter -3- or semi-silvered device; the latter may be any kind of crystal, glass, rigid or flexible plastic; it may even roll up and recover its initial position by application of a mechanical stress.

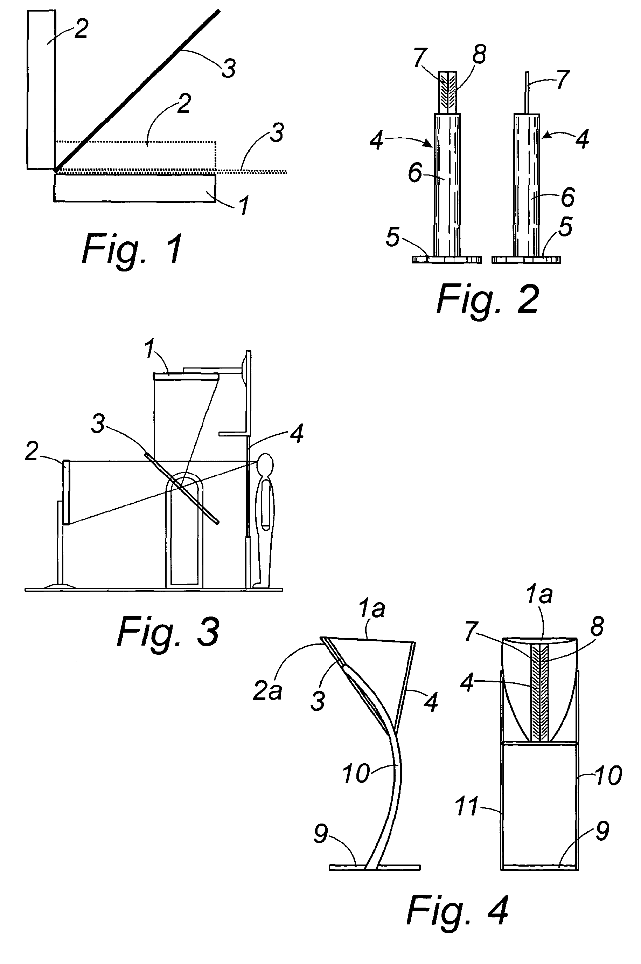

The front and side views of figure 4 show a sample execution of a structure in which the beam splitter -3- (semi-silvered) and the optic inhibitor -4- are included in a single element; this is especially useful in the case of displaying the polarized image of several monitors or an image composition formed by several monitors, in order to avoid the need of using polarized filters for each of the image generating supports, thereby being able to visualize very large images at low cost. Hence, figure 4 shows how to base -9-, from which two curvilinear posts -10- and - 11- emerge, are connected the beam splitter -3- and the optic inhibitor -4-, provided with the corresponding display elements -7- and -8-, as well as the polarizers -1a- and -2a- which would correspond to monitors -1- and -2-, respectively.

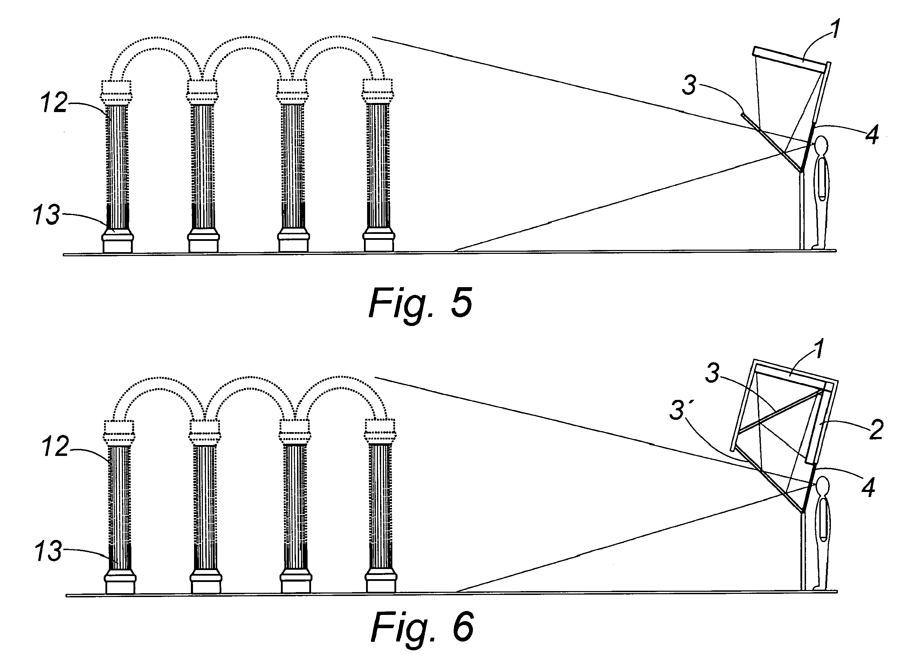

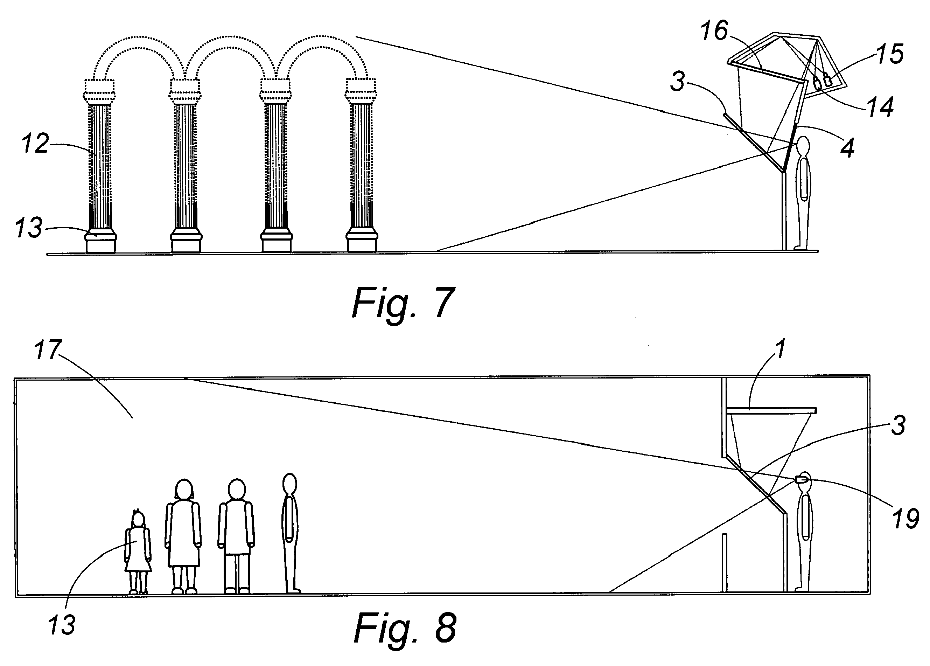

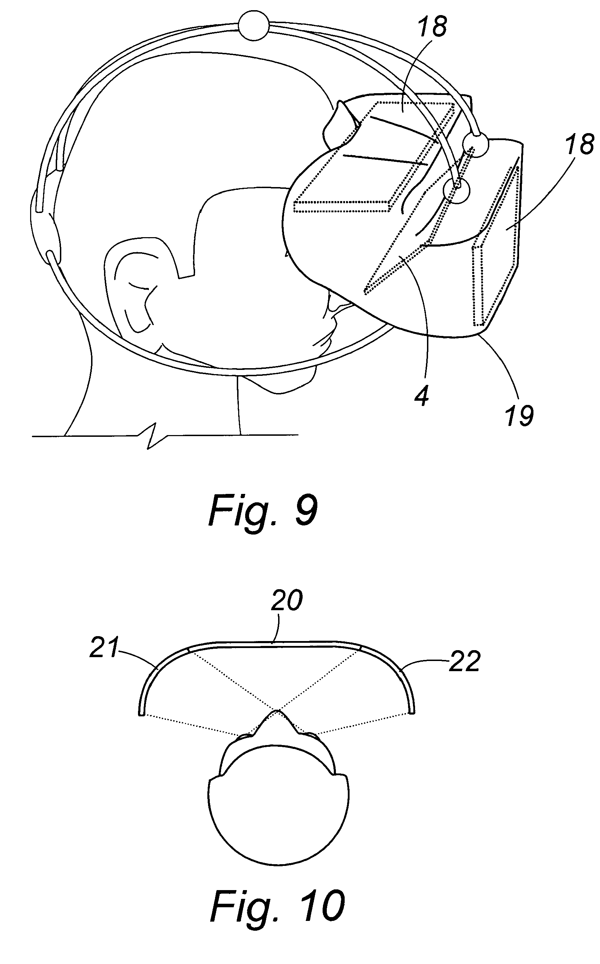

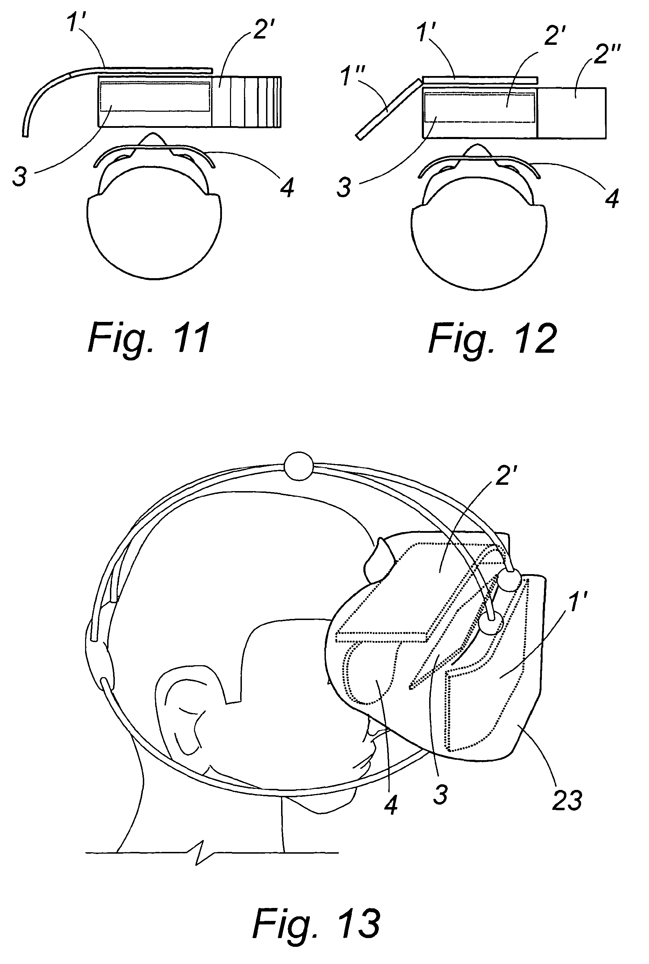

Figures 5, 6 and 7 each schematically show a sample execution of the invention in which the real images and the virtual images are superimposed. In the first one (figure 5), this superimposition is achieved by installing a monitor -1-, which if necessary could be replaced by a light box for photographic images, and which can be located, as shown, at the top or in any other position, provided that the image can be correctly reflected on the beam splitter -3-, through which the observer, located behind the optic inhibitor -4-, sees mixed with the virtual image - 12- (represented by the broken line) the real image -13- (represented by a continuous line), or in other words the objects and environment that are really behind.

The example of figure 6, on the other hand, shows the combination of two monitors -1- and -2- located at a 90° angle and incorporating a beam splitter -3- on the diagonal between them. The whole assembly is what reflects the polarized virtual image -12- on a second beam splitter -3'-, through which the real image - 13- is revealed. Figure 7, meanwhile, shows another example in which the real image -13- and the virtual image -12- are superimposed on the beam splitter -3- with two retro-projectors -14- and -15-, whose now polarized images strike a screen -16- of translucent material.

Figure 8 shows a sample execution of the invention in which, on one hand, a part of the real image -13- of the inside of a room -17- which should be studied or monitored together with objects and/or people who may be entering and exiting the room and, on the other, and produced by any stereoscopic image reproduction system (in this case a monitor -1-), the virtual image -12- are superimposed; this provides to the observer graphics or images resulting from any kind of scanner, where the observer, to be able to move about, also wears the optic inhibitor -4-, and the receivers and analyzers -18- of these scanners built into, for example, a headset -19-, as shown in greater detail in figure 9.

Figure 10 schematically shows how natural human vision provides images to our brain; only a certain frontal space -20- is viewed by the two eyes and is what our brain translates as a 3D image; the rest of the image provided by each eye to the brain will not be interpreted by the brain as a 3D image, since a portion of space of our field of vision, extreme -21- located to the left, is only viewed by the left eye, and the right extreme -22- is only viewed by the right eye. For this reason, this portion of the image visualized in our brain will be flat, from which it is deduced that our brain has mixed vision: flat at the extremes -21- and -22- and three-dimensional in the front area -20-.

Figure number 11 shows a sample execution that adapts the system to approach even more the natural human visual protocol, such that the monitor -1'- reproduces the image captured by the camera intended for viewing by the right eye, and monitor -2'- reproduces the image captured by the other camera and intended for viewing by the left eye. Here monitor -1'- and monitor -2'- have a special design, where the screen surface that reproduces the image of both monitors with the stereoscopic couple is flat and the screen surfaces that reproduce the images of the end angles are curved, and the monitors -1'- and -2'- have a latest generation flexible screen design. The position of the monitors -1'- and -2'- with respect to each other is preferentially at a right angle, and the application of the polarizations in them and in the optic inhibitors -4-, as well as the use and positioning of the beam splitter -3-, are subject to that described above in all the system versions and adaptations.

The above mentioned effect, shown in the sample of figure 11, can also be achieved in different ways or compositions, in which for reproduction of the full image of each eye two or more monitors can be used - whether flat as in the example shown in figure 12, curved (figure 11), flexible or mixed ― to be in charge of reproducing the images of the end angles or each eye, occupying the space of direct vision or frontal or vertical positioning with respect to the observer; therefore the beam splitter in this case does not need to cover the end zones -21- and -22-, since it suffices if it covers the frontal zone -20- in the monitor -1'- by transparency and in the monitor -2'- by reflection. In the same way, as explained above, for the outside images or zones -21- and -22-, the polarization of these screens or monitors -1 "- and -2"- will not be essential

Finally, figure 13 shows a sample execution of the invention in which the monitors -1'- and -2'- and all the elements that make up the system (in all its versions) have been reduced in size and included in a structure -23- by way of a headset to be put on the observer's head, thus achieving a stereoscopic visor with an angle of vision approaching 180° that is capable of emulating the natural protocol of human vision.

It should be noted, as deduced from the description, that the invention is suitable for use for both static images and photographic images of any kind, regardless of whether they are illuminated or retro-illuminated.

## Claims

1. PERFECTED PROCEDURE FOR FABRICATION OF STEREOSCOPIC DISPLAY MONITORS, of the type intended for adaptation to the final natural polarization achieved by TFT-LCD monitors or added to those of any other type, **characterized by** the fact that it is composed of two monitors (1) and (2) with an angular phase difference of 90° with respect to the final polarization achieved by each of them, whose image is reflected and shown through a beam splitter (3) located equidistantly and diagonally between them, and using for the 3D display a polarized optic inhibitor (4) for correction of angular phase differences other than 90°, which may be goggles or the frames substituting for them, in which the angular position between the monitors (1) and (2) may vary just as the distance between them, keeping an angular and spatial equidistance with respect to the beam splitter (3); the latter may be any type made of crystal, glass, rigid or flexible plastic, and may even roll up and recover its initial position by application of a mechanical stress.

2. PERFECTED PROCEDURE FOR FABRICATION OF STEREOSCOPIC DISPLAY MONITORS, according to claim 1, **characterized by** the fact that polarizing filters are provided in the stereoscopic image recording or broadcasting cameras, installing in the left camera a polarizer coinciding with the same polarization angle of the monitor that reproduces the image intended for the left eye or phase lagged 90° with relation to the monitor that reproduces the image intended for the right eye, and to the right camera a polarizer would be coupled that coincides with the angle of polarization of the monitor in charge of reproducing the image for the right eye or phase lagged 90° with respect to the monitor that generates the image for the left eye, in order to capture, in addition to the 3D image of the real space, the image of the stereoscopic display monitors of the invention that may be located in that space and be captured by those cameras.

3. PERFECTED PROCEDURE FOR FABRICATION OF STEREOSCOPIC DISPLAY MONITORS, according to claim 1, **characterized by** the fact that it incorporates as optic inhibitor (4) some external polarizing frames for viewing of the 3D images generated by the monitors without using goggles, composed of passive polarizers, and the fields of polarization may be composed of liquid crystals which can change their angle of polarization by electrically exciting one or both fields.

4. PERFECTED PROCEDURE FOR FABRICATION OF STEREOSCOPIC DISPLAY MONITORS, according to claim 1, **characterized by** the fact that the goggles for 3D display are provided with crystals or plastics with phase lagged polarization angles similar to the frames, formed by the pedestals (5), the support (6) and the display elements (7) and (8), with these goggles having means free of angular balancing consisting of a small counterweight at the bottom of each filter or filter support that, by the force of gravity, moves the filters and maintains the polarization angles in relation to the two polarization fields generated in the monitor.

5. PERFECTED PROCEDURE FOR FABRICATION OF STEREOSCOPIC DISPLAY MONITORS, according to claim 4, **characterized by** the fact that the polarizing filters built into the goggles or the external frames can be replaced by liquid crystal polarizers managed by electromagnetic fields that would provide the polarization angle.

6. PERFECTED PROCEDURE FOR FABRICATION OF STEREOSCOPIC DISPLAY MONITORS, according to claim 4, **characterized by** the fact that the goggles include mini-earphones in the arms that are automatically enabled when display in 2D-Dual mode is adopted.

7. PERFECTED PROCEDURE FOR FABRICATION OF STEREOSCOPIC DISPLAY MONITORS, according to claim 1, **characterized by** the fact that in a sample execution, the monitors (1) and (2) in idle position are placed on the horizontal and adjacent to each other, placing the beam splitter (3), made of a semi-silvered crystal, between them, and that in usage position they are moved to be in a 90° angle, installing between the two the beam splitter (3) on the diagonal.

8. PERFECTED PROCEDURE FOR FABRICATION OF STEREOSCOPIC DISPLAY MONITORS, according to claim 1, **characterized by** the fact that the monitors (1) and (2) can be placed in any idle position, and by means of conventional dismounting, sliding, etc. systems, they are placed in usage position forming a 90° angle between them, whether in horizontal or vertical position, and with the beam splitter (3) on the bisectrix that forms this angle, and they may or may not be incorporated into different support elements such as furniture, structures, frames, etc.

9. PERFECTED PROCEDURE FOR FABRICATION OF STEREOSCOPIC DISPLAY MONITORS, according to claim 1, **characterized by** the fact that if the optical axes of the monitors (1) and (2) are identical and determine a final perpendicular or horizontal polarization, an optical action delay will be applied to one of them so that when the polarized light passes through it, its optical axis will rotate 90°.

10. PERFECTED PROCEDURE FOR FABRICATION OF STEREOSCOPIC DISPLAY MONITORS, according to claim 9, **characterized by** the fact that if the optical axes of the monitors (1) and (2) are identical and determine a final perpendicular or horizontal polarization, it will be possible to correct the resulting angle of polarization by applying an optical action delay to each of the monitors (1) and (2) that makes a 45° rotation of its optical axis or angle of polarization.

11. PERFECTED PROCEDURE FOR FABRICATION OF STEREOSCOPIC DISPLAY MONITORS, according to claims 9 and 10, **characterized by** the fact that if the optical axes of the monitors (1) and (2) are identical and determine a final perpendicular or horizontal polarization, it will be possible to correct the resulting polarization angle by applying a polarizer to each of the screens that achieves a polarization different from the final polarization of the screens of monitors (1) and (2), which could be 45° on each monitor, or 45° on one monitor and -45° on the other, and that depending on whether the natural position of one of the monitors has been changed in the structure used or if horizontal or vertical deflection has been provided in one of the monitors, the value of the angles of the polarizer filters used may be varied to correct the deviations that the reflected image may undergo in the semi-silvered crystal beam splitter (3) and that visualized by transparency.

12. PERFECTED PROCEDURE FOR FABRICATION OF STEREOSCOPIC DISPLAY MONITORS, according to claim 1, **characterized by** the fact that in certain system applications, the observer has the optical sensation of seeing 3D images on a single monitor, if the components are separated from each other far enough so that the observer does not visually associate a structural assembly of the system component elements, maintaining an equidistance of the monitors (1) and (2) and their angular position with respect to the beam splitter (3), and that the optical inhibitors (4) for this application could be any of those mentioned above - polarized goggles, external supports - and these could be mobile or stationary elements, or form part of an element outside the system, e.g. the crystal or glass of a showcase, a structural or dividing screen for architectonic spaces, computer supports, transparent structures of urban furniture, etc.

13. PERFECTED PROCEDURE FOR FABRICATION OF STEREOSCOPIC DISPLAY MONITORS, according to claim 12, **characterized by** the fact that on maintaining the distanced position isolated from the elements, the system makes it possible to view several monitors or compositions of images formed by "video-Wolf" type structures of several TFT-LCD monitors, with the beam splitter (3) and optical inhibitor (4) maintaining a small size if they are located near the observer, since these compositions occupy a space equivalent to that occupied by the monitors (1) and (2), and that they can also intervene by individually forming part of this composition or by generating different mixed compositions between other types of monitors, projected images, retro-projected images, opaque or translucent or illuminated or retro-illuminated photographs, applying to all these elements a polarization similar to the monitors (1) and (2), so that for the image viewed by transparency of the beam splitter (3), the polarization is achieved in the same optical axis and coinciding with the same angle of polarization as the monitor (1), and for the image or composition viewed by reflection a polarization coinciding with the monitor (2) is made; and that these polarizations can be individually applied to each image generating element, or else a structure can be used which includes the beam splitter (3), the optical image inhibitor (4) for the left and right eyes, and the polarizers of the optical fields which, on being applied in this structure, affect all the images we view through them, and therefore it is not necessary to use polarizing filters for each of the image generating supports.

14. PERFECTED PROCEDURE FOR FABRICATION OF STEREOSCOPIC DISPLAY MONITORS, according to claim 13, **characterized by** the fact that instead of the monitor or generating supports of images viewed by transparency through the beam splitter (3), we use the real space and real objects (13) viewed through it as a 3D image that will serve as a support or scenario for generating virtual objects and environments that can optimally coexist with the real objects and environment, using the monitor image that we view by reflection in the beam splitter (3) to provide stereoscopic information on the virtual environment and objects (12) to the brain, having generated this information on the basis of information obtained from the point predestined to the final observer, so that from this spatial point we obtain two photographic or video shots that provide us with the stereoscopic couple of the real environment and objects (with the camera lenses having an angular opening as near as possible to human vision), and using this stereoscopic couple as the basis or template for generation of the stereoscopic virtual environment and objects, adjusting the size, distances and phase difference of angular position so that if they belong to the left visual field, it will be adjusted to the parameters of the image obtained from the real environment by the left camera, and if they belong to the visual field of the right eye, it will be adjusted to the parameters of the real image provided by the right camera; and that it allows for the possibility of interaction to request or generate, on a programmed basis, detailed information on some or all of the generated elements, such that a chosen object can be moved through the virtual space and brought closer to the observer, magnifying its size if necessary, rotating to observe it from all angles, changing is physical features such as transparency, or decomposing it into sub-objects, and the explanations provided by audio; and that the structure surrounding the observer (monitors, retro-projectors or light support for photography, optical inhibitor, beam splitter or semi-silvered) can be fixed or rotated to be able to observe a 360° view, with this movement being limited by the generated scenario and objects, as it is adapted and superimposed on the new scenarios and objects that appear in the visual field of the observer.

15. PERFECTED PROCEDURE FOR FABRICATION OF STEREOSCOPIC DISPLAY MONITORS, according to claim 1, **characterized by** the fact that the 3D or stereoscopic information can be generated by unifying the stereoscopic couple in a single image and applying processing for viewing through the "anaglyph" system, in which the optical inhibitor is composed of a blue-green colored filter in one of its fields and a red filter in the other, being able to use a monitor for video image or a light support for photographic image, which can include an electromagnetic streaming system for display and exhibit of various photograms, and being able to duplicate the photographic support and select the display of one or the other by providing a 90° rotation to the beam splitter.

16. PERFECTED PROCEDURE FOR FABRICATION OF STEREOSCOPIC DISPLAY MONITORS, according to several of the above claims, **characterized by** the fact that the final virtual image can be obtained by the monitor (1) generating the image intended for the right eye and the monitor (2) the image intended for the left eye, using two beam splitters (3) and (3'), one beam splitter (3) included in the structure of the monitor which, together with the polarized optical inhibitor, provides the generated virtual stereoscopic image to the brain, and the second beam splitter (3') visually combines or superimposes the generated virtual image (12) and the image of the real scenario (13).

17. PERFECTED PROCEDURE FOR FABRICATION OF STEREOSCOPIC DISPLAY MONITORS, according to several of the above claims, **characterized by** the fact that the virtual stereoscopic information generated can be reproduced with two projectors (14) and (15), such that to the projector (14) that projects the virtual image intended, for example, for the right eye we would apply a polarizer filter whose optical axis polarizes the image with, for example, a -45° angle, and to the projector (15) that projects the image intended for the left eye we would apply a polarizer filter whose optical axis polarizes the projected image 90° with respect to the polarization applied to projector (14), and that the two polarized images strike a screen (16) built of any translucent material that has the property of not altering the polarized image or light, so that the retro-projector, when the images pass through the screen (16), conserves the optical axis of each image or its respective angle of polarization, with the optical inhibitor being composed of two polarization fields with a 90° phase difference between them.

18. PERFECTED PROCEDURE FOR FABRICATION OF STEREOSCOPIC DISPLAY MONITORS, according to several of the above claims, **characterized by** the fact that to achieve balance of the luminosity of the generated virtual image (12) and the real image (13), as the latter on occasions is located in exteriors and is illuminated with natural light, the intensity of the real image (13) is attenuated by darkening the beam splitter (3), which can also be formed by or include a film on its back composed of a photosensitive material that gradually darkens when the intensity of the exterior light increases, or by using a film of liquid crystal that is managed by the system itself and can become darker or lighter with electromagnetic pulses to adapt to the luminous needs between the generated virtual image (12) and the real image (13).

19. PERFECTED PROCEDURE FOR FABRICATION OF STEREOSCOPIC DISPLAY MONITORS, according to several of the above claims, **characterized by** the fact that the real environment and objects may be in a room (17) that should be observed, studied or monitored together with the objects and beings that are contained in that room, in which the virtual image will be used to show to the observer graphics or images that represent the result and analysis of any kind of scanner, in which representation of these results will be provided as stereoscopic image data which, by optimally superimposing them on the real environment for the observer, the latter will be able to detect and view all the information and results translated to masses or images of different colors that will occupy the real spatial points and planes, providing visual spatial information in real time of everything analyzed, such that the observer will have a predetermined position within the room, just as the readers or analyzers (18) of the different scanning systems used, which are duplicated and strategically separated for each system used in order to provide the phase difference and spatial differentiation of the stereoscopic couple, with the possibility of technically adjusting the system so that the observer can move about inside the room (17), in which case, in addition to having, for example, the optical inhibitors (4) coupled in a headset (19), he will wear the receivers and analyzers (18) of the different scanners or, if applicable, a movement reader or analyzer that provides information to a robotized support that imitates the observer's movement.

20. PERFECTED PROCEDURE FOR FABRICATION OF STEREOSCOPIC DISPLAY MONITORS, according to several of the above claims, **characterized by** the fact that it respects the human visual protocol by producing a 3D view in the monitors and providing information on the stereoscopic couple simultaneously for the two eyes.

21. PERFECTED PROCEDURE FOR FABRICATION OF STEREOSCOPIC DISPLAY MONITORS, according to several of the above claims, **characterized by** the fact that, in another preferential version of the invention, to approach even more the natural human visual protocol, in which only a certain frontal space (20) is viewed by the two eyes, and therefore three dimensionally, whereas the extremes (21) and (22) are viewed as flat, the system adapts so that the monitor (1') reproduces the image intended for the right eye to view, and the monitor (2') reproduces the image intended for the left eye to view, and in which the monitor (1') and the monitor (2') have a special design, where the surface of the screen that reproduces the image of both with the stereoscopic couple is flat, and the screen surfaces that reproduce the images of the end angles can be curved, and where the monitors (1') and ('2) are the latest generation technology of flexible screens.

22. PERFECTED PROCEDURE FOR FABRICATION OF STEREOSCOPIC DISPLAY MONITORS, according to the preceding claim, **characterized by** the fact that to achieve the effect of approaching even more the natural human visual protocol, the invention provides for the use of two or more monitors in charge of reproducing the images of the end angles of each eye, occupying the space of direct vision or a front or vertical positioning with respect to the observer, and that, in this case, the beam splitter does not need to cover the end zones.

23. PERFECTED PROCEDURE FOR FABRICATION OF STEREOSCOPIC DISPLAY MONITORS, according to several of the above claims, **characterized by** the fact that the monitors (1') and (2') and all the elements that make up the system in all its versions may be minimized in size and incorporated into a structure (23) by way of a headset to be placed on the observer's head, thus achieving a stereoscopic visor with an angle of vision approaching 180° and capable of emulating the natural protocol of human visualization.
